# EUROPEAN PATENT SPECIFICATION

(11) **EP 3 220 533 B1**
(45) Date of publication and mention of the grant of the patent: **31.10.2018**
(21) Application number: 15867176.8
(22) Date of filing: 06.11.2015
(51) Int. Cl.: H02P 1/16, H02P 1/18, H02P 7/29

(54) **FAN MOTOR SYSTEM, AIR CONDITIONER, FAN MOTOR CONTROL METHOD AND PROGRAM**
LÜFTERMOTORSYSTEM, KLIMAANLAGE, LÜFTERMOTORSTEUERUNGSVERFAHREN UND -PROGRAMM
SYSTÈME DE MOTEUR DE VENTILATEUR, CLIMATISEUR, PROCÉDÉ ET PROGRAMME DE COMMANDE DE MOTEUR DE VENTILATEUR

(30) Priority: 08.12.2014 JP 2014247713
(43) Date of publication of application: 20.09.2017
(73) Proprietor: Mitsubishi Heavy Industries Thermal Systems, Ltd., Tokyo 108-8215 (JP)
(72) Inventor: IWAMOTO Shigeru, Tokyo 108-8215 (JP); YOSHIDA Junichi, Tokyo 108-8215 (JP)
(74) Representative: Henkel, Breuer & Partner
(86) International application number: PCT/JP2015/081296
(87) International publication number: WO 2016/092995

(56) References cited:
- JP-A- H0 421 381
- JP-A- 2000 116 178
- JP-A- 2000 116 178
- JP-A- 2002 345 278
- JP-A- 2006 299 810

## Description

### [Technical Field]

The present invention relates to a fan motor system, an air conditioner, a fan motor control method, and a program.

Priority is claimed on Japanese Patent Application No. 2014-247713, filed December 8, 2014.

### [Background Art]

When a DC fan motor with a built-in controller integrated circuit (IC) which is widely used in air conditioners and the like is driven, it is possible to adjust a rotational speed of the motor as desired by applying an external command value such as an analog voltage to the controller IC and increasing or decreasing the command value.

As a method of controlling a DC fan motor, a control method of correcting the command value on the basis of a target value of the rotational speed of the motor and an actually measured value (an observed value) of the rotational speed of the motor has been proposed (for example, see Patent Document 1). According to such a control method, it is possible to reduce variations caused by individual differences of the motor and circuit component parts, environmental conditions, and the like with respect to a rotational speed of the motor corresponding to an input command value. A brushless motor with soft start function is also disclosed in JP2000 116178.

### [Citation List]

### [Patent Literature]

### [Patent Document 1]

Japanese Unexamined Patent Application, First Publication No. 6-070594

### [Summary of Invention]

### [Technical Problem]

When a DC fan motor in a stopped state is activated, a technique of performing activation while gradually increasing a command value to be input from a relatively small value is generally adopted in order to realize stable activation. However, if the command value (an analog voltage in this case) is gradually increased from 0 V, time is required until the DC fan motor is activated.

Therefore, a method of presetting an initial command value (a fixed value) larger than 0 V during activation and gradually increasing the command value from the initial command value may be considered. Thereby, it is possible to shorten a required time until a motor is activated from an input start of an initial command value.

However, if an initial command value larger than 0 V is suddenly applied to a DC fan motor in the stopped state, operation during activation of the motor may be unstable due to individual differences of component parts of the DC motor, environmental conditions, and the like, and may fall into an overcurrent state. That is, it is difficult to determine a fixed initial command value for stably performing activation due to a characteristic variation when the DC fan motor is activated.

Also, the above-described DC fan motor control method does not realize stable activation of each DC fan motor while coping with a characteristic variation when each of the DC fan motors is activated.

The present invention has been made to solve the above-described problem and an objective of the present invention is to provide a fan motor system, an air conditioner, a fan motor control method, and a program capable of quickly and stably performing activation.

### [Solution to Problem]

An aspect of the present invention is a fan motor system including: a fan motor unit including a motor, a fan configured to be rotated by the motor, and a controller configured to control a rotational speed of the motor in accordance with an input command value; a command value outputting unit configured to output the command value to the controller while increasing the command value from a predetermined initial value when the motor in a stopped state is activated; a start detecting unit configured to detect a start of rotation of the motor on the basis of an observed value of the rotational speed of the motor; and a start command value recording unit configured to acquire a rotation start command value, which is the command value output by the command value outputting unit at a timing corresponding to a timing at which the start of rotation is detected, and to record the acquired rotation start command value on a recording medium, wherein the command value outputting unit determines an initial value with reference to the rotation start command value recorded on the recording medium when the motor is activated.

Also, according to an aspect of the present invention, in the above-described fan motor system, the start command value recording unit records a plurality of rotation start command values acquired in correspondence with a plurality of activations of the motor on the recording medium, and the command value outputting unit determines the initial value on the basis of a plurality of rotation start command values recorded on the recording medium when the motor is activated.

Also, according to an aspect of the present invention, the above-described fan motor system further includes an operation mode switching unit configured to switch an operation mode to a normal mode or an inspection mode, wherein the start command value recording unit records the plurality of rotation start command values acquired in correspondence with the plurality of activations of the motor if the operation mode is the normal mode and rewrites and records the rotation start command value acquired when the motor is activated from the recorded rotation start command value if the operation mode is the inspection mode.

Also, according to an aspect of the present invention, in the above-described fan motor system, the start command value recording unit records the command value output a preset predetermined time before the timing at which the start of rotation is detected at the timing corresponding to the timing at which the start of rotation is detected as the rotation start command value on the recording medium.

An aspect of the present invention is an air conditioner including the above-described fan motor system.

An aspect of the present invention is a method of controlling a fan motor unit including a motor, a fan configured to be rotated by the motor, and a controller configured to control a rotational speed of the motor in accordance with an input command value, the method including: a command value outputting step of outputting the command value to the controller while increasing the command value from a predetermined initial value when the motor in a stopped state is activated; a start detecting step of detecting a start of rotation of the motor on the basis of an observed value of the rotational speed of the motor; and a start command value recording step of recording a rotation start command value, which is the command value output at a timing corresponding to a timing at which the start of rotation is detected, on a recording medium, wherein the command value outputting step includes determining an initial value with reference to the rotation start command value recorded on the recording medium when the motor is activated.

An aspect of the present invention is a program for causing a computer, which controls a fan motor unit including a motor, a fan configured to be rotated by the motor, and a controller configured to control a rotational speed of the motor in accordance with an input command value, to function as: a command value outputting means configure to output the command value to the controller while increasing the command value from a predetermined initial value when the motor in a stopped state is activated; a start detecting means configured to detect a start of rotation of the motor on the basis of an observed value of the rotational speed of the motor; and a start command value recording means configured to record a rotation start command value, which is the command value output by the command value outputting means at a timing corresponding to a timing at which the start of rotation is detected, on a recording medium, wherein the command value outputting means determines an initial value with reference to the rotation start command value recorded on the recording medium when the motor is activated.

### [Advantageous Effects of Invention]

According to the above-described fan motor system, air conditioner, fan motor control method, and program, it is possible to quickly and stably perform activation.

### [Brief Description of Drawings]

Fig. 1 is a diagram showing a functional configuration of a fan motor system according to a first embodiment.
Fig. 2 is a diagram showing an operation of the fan motor system according to the first embodiment.
Fig. 3 is a diagram showing rotation start command analog voltage information to be recorded on a recording medium according to the first embodiment.
Fig. 4A is a first diagram showing a function of a start command value recording unit according to the first embodiment.
Fig. 4B is a second diagram showing a function of the start command value recording unit according to the first embodiment.
Fig. 5A is a first diagram showing a function of a command value outputting unit according to the first embodiment.
Fig. 5B is a second diagram showing a function of the command value outputting unit according to the first embodiment.
Fig. 5C is a third diagram showing a function of the command value outputting unit according to the first embodiment.
Fig. 5D is a fourth diagram showing a function of the command value outputting unit according to the first embodiment.
Fig. 6 is a first diagram showing a processing flow of a fan motor control device according to the first embodiment.
Fig. 7 is a second diagram showing a processing flow of the fan motor control device according to the first embodiment.

### [Description of Embodiments]

### <First embodiment>

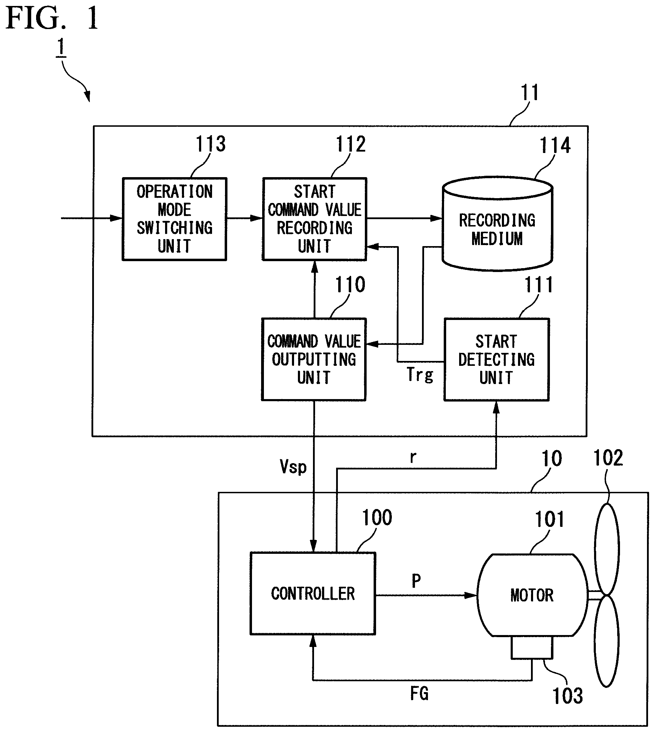

Hereinafter, a fan motor system according to the first embodiment will be described with reference to FIGS. 1 to 7.

Fig. 1 is a diagram showing a functional configuration of the fan motor system according to the first embodiment.

As shown in Fig. 1, a fan motor system 1 includes a fan motor unit 10 and a fan motor control device 11 that controls the fan motor unit 10.

In the present embodiment, the fan motor unit 10 is a DC fan motor incorporating a controller 100 which is a driving IC. The fan motor unit 10 includes the controller 100, a motor 101, a fan 102, and a detector 103.

The controller 100 receives a command value (hereinafter referred to as a command analog voltage Vsp) which is as an analog voltage from the fan motor control device 11 to be described below and outputs a pulse width modulation (PWM) signal of a duty ratio corresponding to the command analog voltage Vsp (hereinafter referred to as a PWM signal P) to the motor 101.

The motor 101 is a DC motor that rotates at a rotational speed that is substantially proportional to the duty ratio of the PWM signal P according to an application of the PWM signal P. Also, the "rotational speed" is actually a rotational speed of the motor 101 (a rotor mounted inside the motor 101) per unit time and is indicated in a unit such as rpm (rotations per minute) or rps (rotations per second).

The fan 102 is a fan which is rotated and driven by rotation of the motor 101 and pushes air.

The detector 103 outputs a pulse signal FG having a frequency corresponding to the rotational speed of the rotor inside the motor 101. The controller 100 can input the pulse signal FG from the detector 103 and acquire an actual rotational speed r which is an observed value of the rotational speed of the motor 101 on the basis of a frequency of the pulse signal FG.

Also, the fan motor control device 11 is a control device that appropriately controls driving of the fan motor unit 10 according to an operation state of an air conditioner on which the fan motor system 1 is mounted. The fan motor control device 11 includes a command value outputting unit 110, a start detecting unit 111, a start command value recording unit 112, an operation mode switching unit 113, and a recording medium 114.

The command value outputting unit 110 outputs an appropriate command analog voltage Vsp to the controller 100 of the fan motor unit 10 in accordance with the operation state of the air conditioner on which the fan motor system 1 is mounted. Particularly, when the motor 101 in a stopped state (a state of a rotational speed 0) is activated, the command value outputting unit 110 outputs the analog command voltage Vsp to the controller 100 while gradually increasing the command analog voltage Vsp from a predetermined initial value Vsp_st.

The start detecting unit 111 acquires the actual rotational speed r from the controller 100 of the fan motor unit 10 and detects a "start of rotation" of the motor 101. Here, in the present embodiment, the "start of rotation" indicates a point in time at which the controller 100 starts outputting the actual rotational speed r when the rotational speed of the motor 101 reaches a pre-specified rotational speed threshold value (for example, 100 rpm).

When the input of the actual rotational speed r (= 100 rpm) is received from the controller 100, the start detecting unit 111 outputs a trigger signal Trg to the start command value recording unit 112 at that timing.

The start command value recording unit 112 records a command value (hereinafter referred to as a rotation start command value Vsp_n) output by the command value outputting unit 110 at a timing corresponding to a timing at which the start detecting unit 111 detected the start of rotation of the motor 101 on the recording medium 114.

In the present embodiment, the timing corresponding to the timing at which the start detecting unit 111 detected the start of rotation of the motor 101 is specifically a timing which is a preset predetermined time Δt (to be described below) earlier than the timing at which the start of rotation is detected.

The operation mode switching unit 113 is assumed to be able to switch an operation mode of the fan motor system 1 to a "normal mode" or an "inspection mode." Specifically, the operation mode switching unit 113 switches the operation mode of the fan motor system 1 to the "normal mode" or the "inspection mode" according to an input operation by a shipment inspection operator or the like. The start command value recording unit 112 performs a process of recording the command analog voltage Vsp based on the set operation mode.

One or more rotation start command values Vsp_n (one or more rotation start duties corresponding thereto) are recorded on the recording medium 114 on the basis of the process of the start command value recording unit 112. The recording medium 114 is a general nonvolatile memory (for example, an electrically erasable programmable read-only memory (EEPROM) or the like).

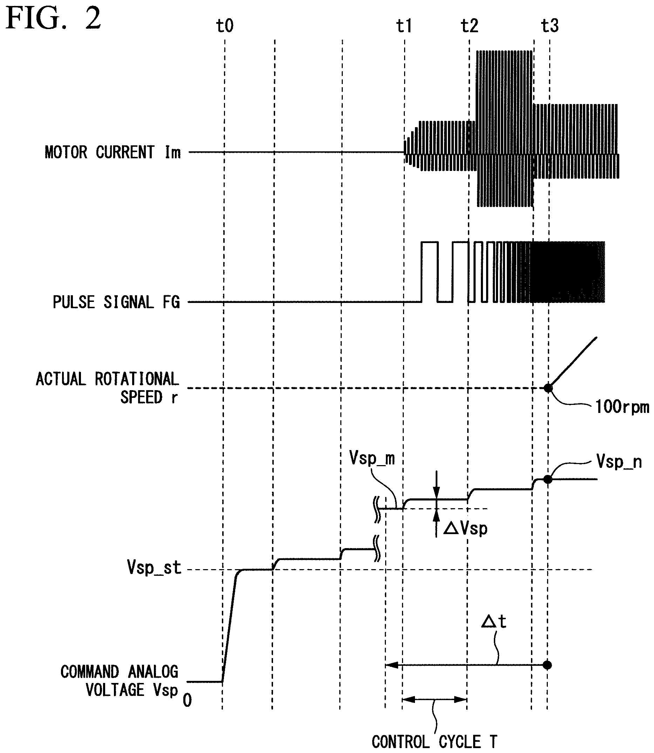

Fig. 2 is a diagram showing an operation of the fan motor system according to the first embodiment.

Fig. 2 shows changes in various parameters with respect to time when the motor 101 in the stopped state at time t0 is activated.

As shown in Fig. 2, the command value outputting unit 110 first outputs the command analog voltage Vsp of the initial value Vsp_st to the controller 100 at time t0 at which the motor 101 is in the stopped state. Subsequently, the command value outputting unit 110 increases the command analog voltage Vsp by a minute voltage ΔVsp from the initial value Vsp_st every time a unit time (a control cycle T) elapses. Here, the control cycle T is, for example, a cycle according to an operation clock of hardware constituting the fan motor control device 11.

Thereby, after a lapse of a predetermined time (N×T) from time t0, the command analog voltage Vsp is given by "Vsp=Vsp_st+N×ΔVsp. The coefficient N is an integer greater than or equal to 0.

Also, with an increase in the command analog voltage Vsp, the motor 101 is activated at time t1 after a lapse of a predetermined time from time t0. That is, as shown in Fig. 2, at time t1, the pulse signal FG including a pulse wave according to the rotation of the motor 101 starts to be output. Also, at time t1, an inter-terminal current (a motor current Im) of the motor 101 starts to flow. However, because the rotational speed of the motor 101 does not reached a pre-specified rotational speed threshold (100 rpm) at this stage, the controller 100 does not recognize the rotation of the motor 101 and does not output the actual rotational speed r (actual rotational speed r=0).

Next, at time t2 at which the command analog voltage Vsp is further increased, the motor current Im increases together with an increase in the rotational speed of the motor 101 (see the pulse signal FG) and enters the overcurrent state. Then, at time t3 immediately thereafter, the rotational speed of the motor 101 reaches the rotational speed threshold (100 rpm), and the controller 100 outputs the actual rotational speed r (r = 100).

The start detecting unit 111 detects the "start of rotation" of the motor 101 at the timing of time t3 at which the input of the actual rotational speed r (r=100) is received from the controller 100. At this stage, the motor 101 is restored from the overcurrent state (see the motor current Im), and thereafter stable operation is continued.

The start command value recording unit 112 receives an input of the trigger signal Trg from the start detecting unit 111 at the timing of time t3. The start command value recording unit 112 acquires the command analog voltage Vsp output at a timing which is the preset predetermined time Δt (for example, three control cycles (Δt =3T)) earlier than the timing of time t3 and records the command analog voltage Vsp as a rotation start command value (hereinafter referred to as a rotation start command analog voltage Vsp_m).

Specifically, assuming that the command analog voltage Vsp at time t3 is the voltage value Vsp_n, the rotation start command analog voltage Vsp_m is given by "Vsp_m=Vsp_n-3×ΔVsp."

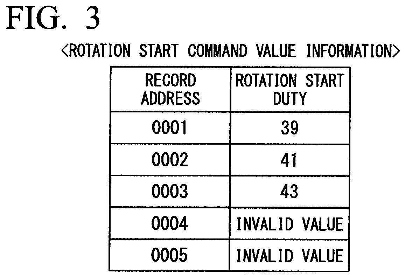

Fig. 3 is a diagram showing rotation start command analog voltage information to be recorded on a recording medium according to the first embodiment.

The rotation start command analog voltage information shown in Fig. 3 is recorded on the recording medium 114 according to the present embodiment. As shown in Fig. 3, the recording medium 114 has five recording areas. The start command value recording unit 112 records a plurality of rotation start command analog voltages Vsp_m on the recording medium 114 in each of the five recording areas every time the motor 101 is activated.

Also, in the present embodiment, the plurality of rotation start command analog voltages Vsp_m are recorded as a rotation start duty which is a duty ratio of the PWM signal P corresponding to the rotation start command analog voltage Vsp_m.

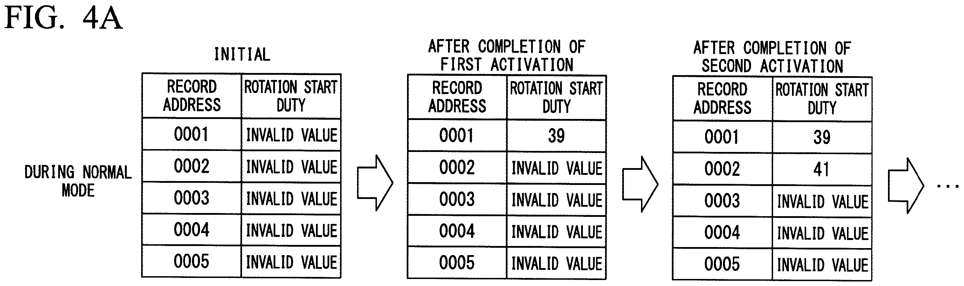

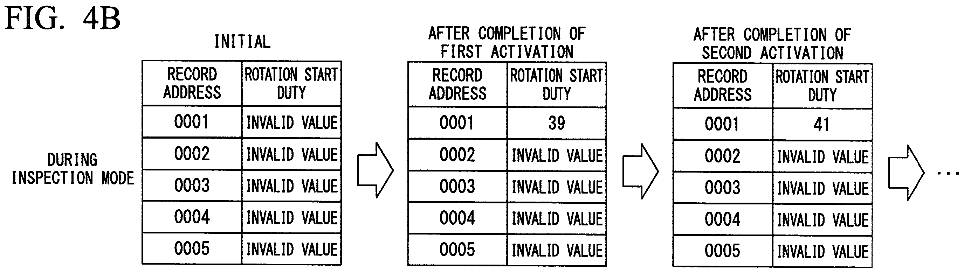

Figs. 4A and 4B are a first diagram and a second diagram showing functions of the start command value recording unit according to the first embodiment.

Fig. 4A is a diagram showing an operation of the start command value recording unit 112 when the operation mode of the fan motor system 1 is the "normal mode." Also, Fig. 4B is a diagram showing an operation of the start command value recording unit 112 when the operation mode of the fan motor system 1 is "inspection mode."

Here, the "normal mode" is an operation mode set when the fan motor system 1 is operated at a customer side after shipment thereof. The "inspection mode" is an operation mode used at a stage of factory inspection before shipment of the fan motor system 1.

In the normal mode, as shown in Fig. 4A, the start command value recording unit 112 records a plurality of rotation start command analog voltages Vsp_m (rotation start duties) acquired in correspondence with a plurality of activations in a recording area of an invalid value (for which there is no record) in order from an address 0001. For example, if the rotation start duty is not recorded in any of recording areas at a beginning thereof, the start command value recording unit 112 records a rotation start command analog voltage Vsp_m (a rotation start duty) acquired at a first activation at the address 0001, and records a rotation start command analog voltage Vsp_m (a rotation start duty) acquired at a second activation at an address 0002.

On the other hand, in the inspection mode, as shown in Fig. 4B, the start command value recording unit 112 rewrites and records a rotation start command analog voltage Vsp_m (rotation start duty) acquired when the motor 101 is activated from a recorded rotation start command value. That is, the start command value recording unit 112 rewrites the rotation start command analog voltage Vsp_m (the rotation start duty) acquired at the second activation from the rotation start duty of the address 0001 recorded after the completion of the first activation and records the rotation start command analog voltage Vsp_m (the rotation start duty) at the same address 0001.

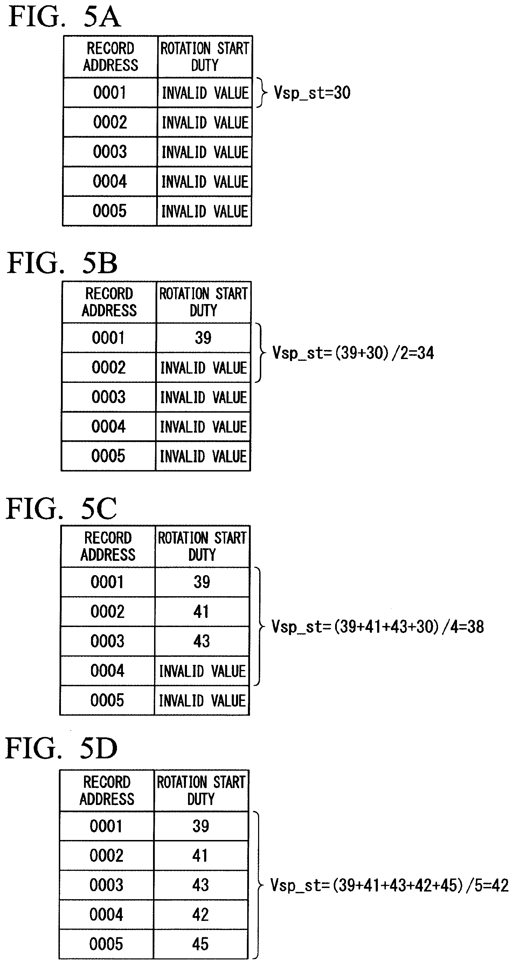

Figs. 5A, 5B, 5C, and 5D are a first diagram, a second diagram, a third diagram, and a fourth diagram showing functions of the command value outputting unit according to the first embodiment.

As described above, the command value outputting unit 110 according to the present embodiment determines the initial value Vsp_st with reference to the rotation start command analog voltage Vsp_m (the rotation start duty (Fig. 3)) recorded on the recording medium 114 when the motor 101 is activated.

Specifically, the initial value Vsp_st is determined as follows.

For example, as shown in Fig. 5A, if no rotation start duty is recorded in the five recording areas of the recording medium 114, the command value outputting unit 110 outputs the initial value Vsp_st as a pre-specified initial fixed value (for example, "30") when the motor 101 is activated. Here, the initial fixed value "30" is an initial value decreased to an extent that it can always be stably activated regardless of what type of fan motor unit 10 in consideration of a fluctuation of a characteristic variation that can occur in the fan motor unit 10. In this case, the command value outputting unit 110 activates the motor 101 by gradually increasing the command analog voltage Vsp from the initial value Vsp_st corresponding to the duty ratio "30."

As shown in Fig. 5B, if a valid rotation start duty is recorded in only one of the recording areas of the recording medium 114 (only at the address 0001), the command value outputting unit 110 refers to the rotation start duty recorded at the address 0001 and determines an average value of the rotation start duty and the initial fixed value "30" as the initial value Vsp_st. Specifically, the command value outputting unit 110 calculates an expression "(39+30)/2" for obtaining the average value of a rotation start duty "39" recorded at the address 0001 and the initial fixed value "30" and obtains an initial value Vsp_st "34."

As shown in Fig. 5C, if valid rotation start duties are recorded in three (addresses 0001 to 0003) of the recording areas of the recording medium 114, the command value outputting unit 110 refers to the rotation start duties recorded at the addresses 0001 to 0003 and determines an average value of the plurality of rotation start duties and the initial fixed value "30" as the initial value Vsp_st. Specifically, the command value outputting unit 110 calculates an expression "(39+41+43+30)/4" for calculating an average value of a rotation start duty "39" recorded at the address 0001, a rotation start duty "41" recorded at the address 0002, a rotation start duty "43" recorded at the address 0003, and the initial fixed value "30" and obtains an initial value Vsp_st "38."

As described above, if any one invalid value is included in the five recording areas of the recording medium 114, the command value outputting unit 110 outputs an average value of one or more recorded rotation start duties including the initial fixed value "30.

Also, as shown in Fig. 5D, if valid rotation start duties are recorded in all of the recording areas (addresses 0001 to 0005) of the recording medium 114, the command value outputting unit 110 refers to the rotation start duties recorded at the addresses 0001 to 0005 and determines an average value of the rotation start duties as the initial value Vsp_st. Specifically, the command value outputting unit 110 calculates an expression "(39+41+43+42+45)/5" for obtaining the average value of the rotation start duties "39," "41," "43," "42" and "45" recorded at the addresses 0001 to 0005 and obtains an initial value Vsp_st "42."

As described above, if valid values are recorded in all of the five recording areas of the recording medium 114, the command value outputting unit 110 calculates an average value of five recorded rotation start duties.

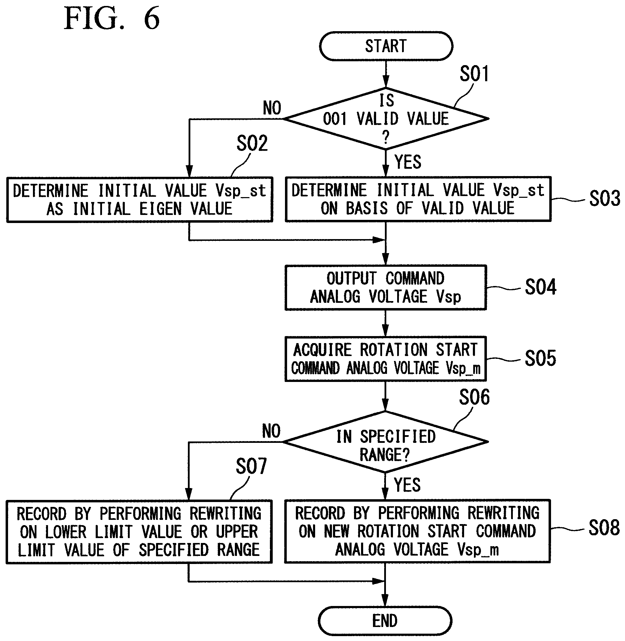

Fig. 6 is a first diagram showing a processing flow of the fan motor control device according to the first embodiment.

Fig. 6 is a processing flow to be executed when the operation mode of the fan motor system 1 is the "inspection mode." The processing flow shown in Fig. 6 is started when the motor 101 in the stopped state is activated.

First, the command value outputting unit 110 determines whether or not a valid rotation start duty is recorded in one recording area (the address 0001) with reference to rotation start command value information (Fig. 3) recorded on the recording medium 114, (step S01).

If no valid rotation start duty is recorded in the one recording area (step S01: NO), the command value outputting unit 110 determines a predetermined initial fixed value (for example, "30") as the initial value Vsp_st (step S02). On the other hand, if a valid rotation start duty is recorded in the one recording area (step S01: YES), an average value with the initial fixed value is calculated on the basis of the valid rotation start duty (Fig. 5B) and the initial value Vsp_st is determined (step S03).

If the initial value Vsp_st is determined in step S02 or step S03, the command value outputting unit 110 outputs the command analog voltage Vsp while increasing the command analog voltage Vsp by ΔVsp for every control cycle T from the determined initial value Vsp_st (step S04). Thereby, the start detecting unit 111 detects a start of rotation of the motor 101 at a certain timing (time t3 shown in Fig. 2). At this time, the start detecting unit 111 outputs the trigger signal Trg to the start command value recording unit 112.

The start command value recording unit 112 that has received an input of the trigger signal Trg from the start detecting unit 111 acquires the rotation start command analog voltage Vsp_m output at a timing which is the predetermined time Δt earlier than the timing (step S05).

Before the acquired rotation start command analog voltage Vsp_m is recorded on the recording medium 114, the start command value recording unit 112 determines whether or not the acquired rotation start command analog voltage Vsp_m falls in a predetermined recording range specified in advance (step S06).

Here, the predetermined recording range is specified by a predetermined lower limit value Lim1 and upper limit value Lim2 (> Lim1). The lower limit value Lim1 and the upper limit value Lim2 are determined as, for example, Lim1=30, Lim2=50, and the like as the rotation start duty. That is, if a rotation start duty corresponding to the rotation start command analog voltage Vsp_m is out of the range from the lower limit value Lim1 to the upper limit value Lim2, the acquired rotation start command analog voltage Vsp_m can be regarded to be a clearly abnormal value.

If the acquired rotation start command analog voltage Vsp_m does not fall in the predetermined recording range specified in advance (step S06: NO), the start command value recording unit 112 records the lower limit value Lim1 or the upper limit value Lim2 that specifies the recording range on the recording medium 114 (step S07). That is, the start command value recording unit 112 records the lower limit value Lim1 if the rotation start duty corresponding to the rotation start command analog voltage Vsp_m is less than the lower limit value Lim1, and records the upper limit value Lim2 if the rotation start duty exceeds the upper limit value Lim2.

If the acquired rotation start command analog voltage Vsp_m falls in the predetermined recording range specified in advance (step S06: YES), the start command value recording unit 112 records the rotation start duty corresponding to the acquired rotation start command analog voltage Vsp_m on the recording medium 114 (step S08).

Because the operation mode is set to the "inspection mode" in this processing flow, when the rotation start duty (or the lower limit value Lim1 or the upper limit value Lim2) is recorded in step S07 and step S08, the start command value recording unit 112 rewrites and records the rotation start duty from the valid value already recorded in the one recording area (the address 0001) of the recording medium 114 (see Fig. 4B).

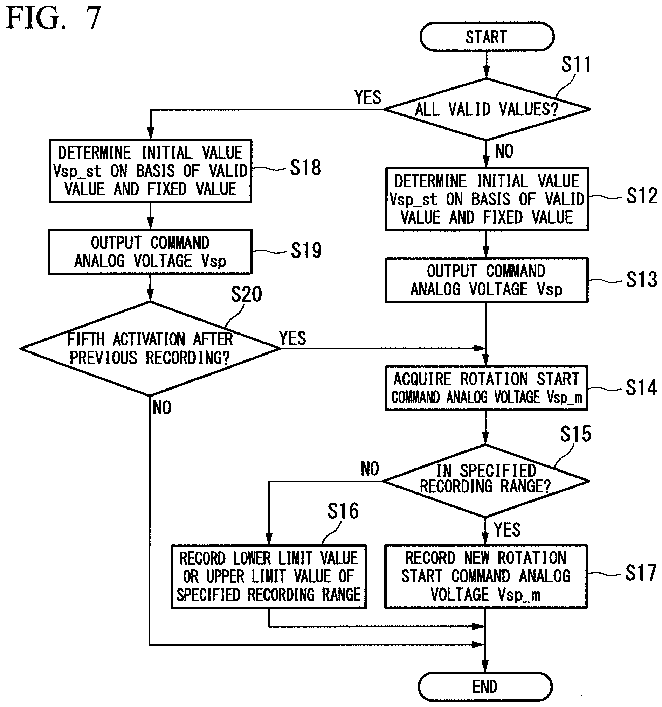

Fig. 7 is a second diagram showing a processing flow of the fan motor control device according to the first embodiment.

Fig. 7 is a processing flow to be executed when the operation mode of the fan motor system 1 is the "normal mode." As in Fig. 6, the processing flow shown in Fig. 7 is started when the motor 101 in the stopped state is activated.

First, the command value outputting unit 110 determined whether or not valid rotation start duties are recorded in all recording areas (the addresses 0001 to 0005) with reference to rotation start command value information (Fig. 3) recorded on the recording medium 114 (step S11).

If a valid rotation start duty is not recorded in any one of the recording areas (step S11: NO), the command value outputting unit 110 determines the initial value Vsp_st on the basis of the recorded rotation start duty and an initial fixed value (for example, "30") (step S12) (see Figs. 5A to 5C).

If the initial value Vsp_st is determined in step S12, the command value outputting unit 110 outputs the command analog voltage Vsp while increasing the command analog voltage Vsp by ΔVsp at every control cycle T from the determined initial value Vsp_st (step S13). Thereby, the start detecting unit 111 detects a start of rotation of the motor 101 at a certain timing (time t3 shown in Fig. 2). At this time, the start detecting unit 111 outputs the trigger signal Trg to the start command value recording unit 112.

The start command value recording unit 112 that received an input of the trigger signal Trg from the start detecting unit 111 acquires the rotation start command analog voltage Vsp_m output at a timing which is the predetermined time Δt earlier than the timing (step S14).

The start command value recording unit 112 determines whether or not the acquired rotation start command analog voltage Vsp_m falls in a predetermined recording range specified in advance (step S15).

If the acquired rotation start command analog voltage Vsp_m does not fall in the predetermined recording range specified in advance (step S15: NO), the start command value recording unit 112 records the lower limit value Lim1 or the upper limit value Lim2 that specifies the recording range on the recording medium 114 (step S16).

If the acquired rotation start command analog voltage Vsp_m falls in the predetermined recording range specified in advance (step S15: YES), the start command value recording unit 112 records a rotation start duty corresponding to the acquired rotation start command analog voltage Vsp_m on the recording medium 114 (step S17).

Because the operation mode is set to the "normal mode" in this processing flow, when the rotation start duty (or the lower limit value Lim1 or the upper limit value Lim2) is recorded in step S16 and step S17, the start command value recording unit 112 records the rotation start duty in a recording area of an invalid value which is not yet written among a plurality of recording areas of the recording medium 114 (see Fig. 4A).

On the other hand, if valid rotation start duties are recorded in all of the recording areas (step S11: YES), the command value outputting unit 110 calculates an average value of all of the recorded rotation start duties and determines the initial value Vsp_st (step S18) (see Fig. 5D).

If the initial value Vsp_st is determined in step S18, the command value outputting unit 110 outputs the command analog voltage Vsp while increasing the command analog voltage Vsp by ΔVsp every control cycle T from the determined initial value Vsp_st (step S19).

The start command value recording unit 112 determines whether or not the number of activations counted from a previous activation for which a recording process is performed on the recording medium 114 reaches a predetermined number (for example, five) (step S20). If the number of activations counted from the previous activation for which the recording process is performed on the recording medium 114 does not reach the predetermined number (step S20: NO), the start command value recording unit 112 does not acquire and record the rotation start command analog voltage Vsp_m. In this case, the fan motor control device 11 ends a series of processes.

On the other hand, if the number of activations counted from the previous activation for which the recording process is performed on the recording medium 114 reaches the predetermined number (step S20: YES), the start command value recording unit 112 executes the above-described step S14 and processing subsequent thereto, and performs a process of recording the rotation start command analog voltage Vsp_m (a rotation start duty) on the recording medium 114.

According to the above-described processing flow, the start command value recording unit 112 records the rotation start command analog voltage Vsp_m every activation until a plurality of (five) recording areas of the recording medium 114 are filled, but a process of overwriting and recording the rotation start command analog voltage Vsp_m every predetermined number of activations (every 5 activations) is performed after all of the recording areas are filled.

Thereby, because a frequency at which the rotation start command analog voltage Vsp_m is rewritten to a new rotation start command analog voltage Vsp_m decreases, it is possible to prolong the life of the recording medium 114 having a limited number of times of recording.

However, other embodiments are not limited to this mode. Even after all of the recording areas are filled, the start command value recording unit 112 may overwrite and record the rotation start command analog voltage Vsp_m every activation.

Also, if the processing of step S18 to step S20 is performed and the recording processing of step S16 or step S17 is performed, valid rotation start duties are already recorded in all of the recording areas of the addresses 0001 to 0005. In this case, the start command value recording unit 112 performs overwriting and recording in order from a recording area in which recording is performed earliest. For example, if rotation start duties are recorded in order of the addresses 0001 to 0005 after five activations of the motor 101, a rotation start duty obtained at a sixth activation is recorded at and overwrites the address 0001.

Hereinafter, an operation and effect of the fan motor system 1 according to the above-described first embodiment will be described.

Here, if the command value outputting unit 110 set only a preset initial fixed value (for example, rotation start duty=30) as the initial value Vsp_st every time the motor 101 is activated, the command analog voltage Vsp is increased and time is required until the start of rotation of the motor 101 is reached.

However, if the command analog voltage Vsp is applied by setting the initial value Vsp_st to a higher fixed value, the command analog voltage Vsp reaching the overcurrent state (see time t2 of Fig. 2) is considered to be applied to the motor 101 in the stopped state from the beginning according to individual differences of the components of the fan motor unit 10, environmental conditions, and so on. Then, an initial motion of the motor 101 becomes unstable, and the motor current Im may become excessive, resulting in operational stoppage.

On the other hand, according to the fan motor system 1 according to the first embodiment, the start detecting unit 111 detects the start of rotation of the motor 101 on the basis of an input from the controller 100 (the actual rotational speed r), and the start command value recording unit 112 acquires a rotation start command analog voltage Vsp_m output at a timing corresponding to the start of rotation and records the rotation start command analog voltage Vsp_m on the recording medium 114. When the motor 101 is activated, the command value outputting unit 110 determines the initial value Vsp_st of the command analog voltage Vsp with reference to the rotation start command analog voltage Vsp_m recorded on the recording medium 114.

Thereby, the command value outputting unit 110 can specify the initial value Vsp_st corresponding to a past operation history, that is, a learning value (the rotation start command analog voltage Vsp_m) recorded at the previous activation. Therefore, the command value outputting unit 110 can apply an optimum initial value Vsp_st which shortens a time required to start the rotation and does not fall into the overcurrent state.

Therefore, it is possible to provide a fan motor system capable of being activated quickly and stably.

Also, the start command value recording unit 112 according to the present embodiment records a plurality of rotation start command analog voltages Vsp_m (rotation start duties) acquired in correspondence with a plurality of activations of the motor 101 on the recording medium 114. Also, the command value outputting unit 110 determines the initial value Vsp_st on the basis of the plurality of rotation start command analog voltages Vsp_m (rotation start duties) recorded on the recording medium 114 when the motor 101 is activated.

Thereby, it is possible to reduce a process of averaging a variation of the learning value (the rotation start command analog voltage Vsp_m) that can occur due to a change in an environmental condition or the like on the basis of a plurality of learning values acquired in the plurality of activations or the like. Therefore, it is possible to further optimize the initial value Vsp_st.

Also, the fan motor control device 11 according to the present embodiment includes the operation mode switching unit 1 13 that can switch the operation mode of the fan motor system 1 to the "normal mode" or the "inspection mode." Also, the start command value recording unit 1 12 records a plurality of rotation start command analog voltages Vsp_m acquired in correspondence with a plurality of activations of the motor 101 in the case of the "normal mode," and rewrites and records the rotation start command analog voltage Vsp_m acquired when the motor 101 is activated from the recorded rotation start command analog voltage Vsp_m in the case of the "inspection mode."

Here, at a time of factory inspection before product shipment, a process in which a fan motor different from the fan motor unit 10 connected to the fan motor control device 11 at a time of production shipment is connected and is subjected to a test operation may be present. Thus, as described above, at the time of factory inspection, the fan motor control device 11 records only a learning value (the rotation start command analog voltage Vsp_m) for a past one time so that it is possible to perform shipment by learning only a final state immediately before the shipment at a final check and reduce a work burden at the time of shipment.

Further, the start command value recording unit 112 according to the present embodiment records the command analog voltage Vsp output the predetermined time Δt before a timing at which the start detecting unit 111 detected a start of rotation of the motor 101 as the rotation start command analog voltage Vsp_m.

Thereby, even when the learning value (the rotation start command analog voltage Vsp_m) varies due to a change in an environmental condition or the like, the motor 101 can be prevented from falling into the overcurrent state because an application of the command analog voltage Vsp starts from a voltage value which is a predetermined amount less than the command analog voltage Vsp at a timing at which the start of rotation is actually detected.

Also, if valid rotation start duties are recorded in all of the recording areas of the recording medium 114 in the normal operation mode, the start command value recording unit 112 according to the present embodiment performs overwriting and recording in order from a recording area in which recording is performed earliest.

Thereby, even if the characteristic value of the motor 101 or the like constituting the fan motor unit 10 changes over time due to a long-term operation of an air conditioner equipped with the fan motor system 1, the optimum initial value Vsp_st can always be determined by following a change in the characteristic value.

### <Other embodiments>

Although the first embodiment has been described in detail above, a specific form of the fan motor system 1 according to each embodiment is not limited to the above-described forms, and various modifications may be made without departing from the scope.

For example, although a form in which the fan motor system 1 according to the present embodiment determines the initial value Vsp st on the basis of an average of a plurality of recorded learning values in the "normal mode" has been described, other embodiments are not limited to this form. That is, the fan motor system 1 according to another embodiment may determine the initial value Vsp_st using a median value or a most frequent value of the plurality of learning values or a representative value similar thereto.

Also, although a form in which the fan motor system I according to the present embodiment records the command analog voltage Vsp output the predetermined time Δt before a timing at which a start of rotation of the motor 101 is detected as the rotation start command analog voltage Vsp_m has been described, other embodiments are not limited to this form. That is, the fan motor system 1 according to another embodiment may record the command analog voltage Vsp output at a timing at which the start of rotation of the motor 101 is detected as the rotation start command analog voltage Vsp_m.

In each of the above-described embodiments, a program for realizing various functions of the fan motor system 1 (the fan motor control device 11) is recorded on a computer-readable recording medium, and various types of processing are assumed to be executed by causing a computer system to read and execute the program recorded on the recording medium. Here, processes of the various types of processing of the above-described fan motor control device 11 are stored in the computer-readable recording medium in the form of the program, and the above-described various types of processing are performed by the computer reading and executing this program. Here, the computer-readable recording medium refers to a magnetic disk, a magneto-optical disc, a CD-ROM, a DVD-ROM, a semiconductor memory, or the like. Also, a computer program may be distributed to a computer through a communication line, and the computer receiving the distributed computer program may execute the program.

Also, various functions of the fan motor control device 11 may be provided over a plurality of devices connected via a network.

While several embodiments of the present invention have been described, these embodiments have been presented by way of example only, and are not intended to limit the scope of the invention. These embodiments may be embodied in a variety of other forms.

### [Industrial Applicability]

According to the above-described fan motor system, air conditioner, fan motor control method, and program, it is possible to quickly and stably perform activation.

### [Reference Signs List]

1 Fan motor system
10 Fan motor unit
100 Controller
101 Motor
102 Fan
103 Detector
11 Fan motor control device
110 Command value outputting unit
111 Start detecting unit
112 Start command value recording unit
113 Operation mode switching unit
114 Recording medium

## Claims

1. A fan motor system (1) comprising:
a fan motor unit (10) including a motor (101), a fan (102) configured to be rotated by the motor (101), and a controller (100) configured to control a rotational speed of the motor (101) in accordance with an input command value;
a command value outputting unit (110) configured to output the command value to the controller (100) while increasing the command value from a predetermined initial value when the motor (101) in a stopped state is activated;
a start detecting unit (111) configured to detect a start of rotation of the motor (101) on the basis of an observed value of the rotational speed of the motor (101);
a start command value recording unit (112) configured to acquire a rotation start command value, which is the command value output by the command value outputting unit (110) at a timing corresponding to a timing at which the start of rotation is detected, and to record the acquired rotation start command value on a recording medium (114); and
an operation mode switching unit (113) configured to switch an operation mode to a normal mode or an inspection mode,
wherein the start command value recording unit (112) records a plurality of rotation start command values acquired in correspondence with a plurality of activations of the motor (101) if the operation mode is the normal mode and rewrites and records the rotation start command value acquired when the motor (101) is activated from the recorded rotation start command value if the operation mode is the inspection mode, and
wherein the command value outputting unit (110) determines an initial value on the basis of one or more rotation start command values recorded on the recording medium (114) when the motor (101) is activated.

2. The fan motor system (1) according to claim 1, wherein the start command value recording unit (112) is configured to record the command value output a preset predetermined time before the timing at which the start of rotation is detected at the timing corresponding to the timing at which the start of rotation is detected as the rotation start command value on the recording medium (114).

3. An air conditioner comprising the fan motor system (1) according to claim 1 or 2.

4. A method of controlling a fan motor unit (10) including a motor (101), a fan (102) configured to be rotated by the motor (101), and a controller (100) configured to control a rotational speed of the motor (101) in accordance with an input command value, the method comprising:
a command value outputting step of outputting the command value to the controller (100) while increasing the command value from a predetermined initial value when the motor (101) in a stopped state is activated;
a start detecting step of detecting a start of rotation of the motor (101) on the basis of an observed value of the rotational speed of the motor (101);
a start command value recording step of recording a rotation start command value, which is the command value output at a timing corresponding to a timing at which the start of rotation is detected, on a recording medium (114); and
an operation mode switching step of switching an operation mode to a normal mode or an inspection mode,
wherein the start command value recording step includes recording a plurality of rotation start command values acquired in correspondence with a plurality of activations of the motor (101) if the operation mode is the normal mode and rewriting and recording the rotation start command value acquired when the motor (101) is activated from the recorded rotation start command value if the operation mode is the inspection mode, and
wherein the command value outputting step includes determining an initial value on the basis of one or more rotation start command values recorded on the recording medium (114) when the motor (101) is activated.

5. A program for causing a computer, which controls a fan motor unit (10) including a motor (101), a fan (102) configured to be rotated by the motor (101), and a controller (100) configured to control a rotational speed of the motor (101) in accordance with an input command value, to function as:
a command value outputting means configured to output the command value to the controller (100) while increasing the command value from a predetermined initial value when the motor (101) in a stopped state is activated;
a start detecting means configured to detect a start of rotation of the motor (101) on the basis of an observed value of the rotational speed of the motor (101);
a start command value recording means configured to record a rotation start command value, which is the command value output by the command value outputting means at a timing corresponding to a timing at which the start of rotation is detected, on a recording medium (114); and
an operation mode switching means configured to switch an operation mode to a normal mode or an inspection mode,
wherein the start command value recording means records a plurality of rotation start command values acquired in correspondence with a plurality of activations of the motor (101) if the operation mode is the normal mode and rewrites and records the rotation start command value acquired when the motor (101) is activated from the recorded rotation start command value if the operation mode is the inspection mode, and
wherein the command value outputting means determines an initial value on the basis of one or more rotation start command values recorded on the recording medium (114) when the motor (101) is activated.

## Patentansprüche

1. Lüftermotorsystem (1) mit:
einer Lüftermotoreinheit (10) mit einem Motor (101), einem Lüfter (102), der ausgestaltet ist, um durch den Motor (101) gedreht zu werden, und einer Steuerung (100), die ausgestaltet ist, um die Rotationsgeschwindigkeit des Motors (101) in Übereinstimmung mit einem Eingabebefehlswert zu steuern;
einer Befehlswertausgabeeinheit (110), die ausgestaltet ist, um den Befehlswert an die Steuerung (100) auszugeben, während sie den Befehlswert von einem vorgegebenen Anfangswert, wenn der Motor (101) in einem gestoppten Zustand aktiviert wird, erhöht;
einer Starterfassungseinheit (101), die ausgestaltet ist, um einen Beginn der Rotation des Motors (101) auf der Grundlage des beobachteten Wertes der Rotationsgeschwindigkeit des Motors (101) zu erfassen;
einer Startbefehlswertaufzeichnungseinheit (112), die ausgestaltet ist, um einen Rotationsstartbefehlswert zu erhalten, was der Befehlswert ist, der von der Befehlswertausgabeeinheit (110) zu einem Timing ausgegeben wird, das einem Timing entspricht, bei dem der Start der Rotation erfasst wird, und zum Aufzeichnen des erfassten Rotationsstartbefehlswerts auf einem Aufzeichnungsmedium (114); und
einer Betriebsmodusumschalteinheit (113), die ausgestaltet ist, um ein Betriebsmodus zu einem normalen Modus oder einem Untersuchungsmodus umzuschalten,
wobei die Startbefehlswertaufzeichnungseinheit (112) eine Mehrzahl von Rotationsstartbefehlswerten aufzeichnet, die in Übereinstimmung mit einer Mehrzahl von Aktivierungen des Motors (101) erfasst werden, wenn der Betriebsmodus in dem normalen Modus ist, und den Rotationsstartbefehlswert überschreibt und aufzeichnet, der erhalten wird, wenn der Motor (101) von dem aufgezeichneten Rotationsstartbefehlswert aktiviert wird, wenn der Betriebsmodus in dem Untersuchungsmodus ist, und
wobei die Befehlswertausgabeeinheit (110) einen Anfangswert auf der Grundlage von einem oder mehreren Rotationsstartbefehlswerten bestimmt, die auf dem Aufzeichnungsmedium (114) aufgezeichnet sind, wenn der Motor (101) aktiviert wird.

2. Lüftermotorsystem nach Anspruch 1, bei dem die Startbefehlswertaufzeichnungseinheit (112) ausgestaltet ist, um den Befehlswert aufzuzeichnen, der zu einer vorgegebenem bestimmten Zeit an das Aufzeichnungsmedium (114) ausgegeben wird, vor einem Timing, zu dem der Start der Rotation erfasst wird, mit einem Timing entsprechend dem Timing, zu dem der Start der Rotation der erfasst wird, als den Rotationsstartbefehlswert.

3. Klimaanlage mit einem Lüftermotorsystem (1) nach Anspruch 1 oder 2.

4. Verfahren zum Steuern einer Lüftermotoreinheit (10) mit einem Motor (101), einem Lüfter (102), der ausgestaltet ist, um durch den Motor (101) rotiert zu werden, einer Steuerung (100), die ausgestaltet ist, um eine Rotationsgeschwindigkeit des Motors (101) in Übereinstimmung mit einem Eingabebefehlswert zu steuern, wobei das Verfahren umfasst:
einem Befehlswertausgabeschritt zum Ausgeben des Befehlswerts an die Steuerung (100), während der Befehlswert von einem vorgegebenen Anfangswert, wenn der Motor (101) in einem gestoppten Zustand aktiviert wird, erhöht wird;
einem Starterfassungsschritt zum Erfassen eines Starts der Rotation des Motors (101) auf der Grundlage des beobachteten Werts der Rotationsgeschwindigkeit des Motors (101) ;
einem Startbefehlswertaufzeichnungsschritt zum Aufzeichnen eines Rotationsstartbefehlswerts, der der Befehlswert ist, der zu eine Timing entsprechend einem Timing ausgegeben wird, zu dem der Start der Rotation erfasst wird, auf einem Aufzeichnungsmedium (114); und
einem Betriebsmodusumschaltschritt zum Umschalten eines Betriebsmodus in einen normalen Modus oder in einen Untersuchungsmodus,
wobei der Startbefehlswertaufzeichnungsschritt ein Aufzeichnen einer Mehrzahl von Rotationsstartbefehlswerten umfasst, die in Übereinstimmung mit einer Mehrzahl von Aktivierungen des Motors erhalten werden, wenn der Betriebsmodus in dem normalen Modus ist, und einem Überschreiben und Aufzeichnen des Rotationsstartbefehlswerts, der erhalten wird, wenn der Motor (101) aktiviert wird, von dem Aufzeichnungsrotationsstartbefehlswert, wenn der Betriebsmodus in dem Untersuchungsmodus ist, und
wobei der Befehlswertausgabeschritt ein Bestimmen eines Anfangswerts auf der Grundlage des einen oder mehreren Rotationsstartbefehlswerts umfasst, die in dem Aufzeichnungsmedium (114) aufgezeichnet sind, wenn der Motor (101) aktiviert wird.

5. Programm zum Veranlassen eines Computers, der eine Lüftermotoreinheit (10) steuert, die einen Motor (101), einen Lüfter (102), der zur Rotation durch den Motor (101) ausgestaltet ist, und eine Steuerung (100), die zum Steuern der Rotationsgeschwindigkeit des Motors (101) in Übereinstimmung mit einem Eingabebefehlswert ausgestaltet ist, enthält, um zu arbeiten als:
ein Befehlswertausgabemittel, das ausgestaltet ist, zum Ausgeben eines Befehlswerts an die Steuerung (100), während der Befehlswert von einem vorgegebenen Anfangswert, wenn der Motor (101) in einem gestoppten Zustand aktiviert wird, erhöht wird;
ein Starterfassungsmittel, das ausgestaltet ist, um einen Start der Rotation des Motors (101) auf der Grundlage eines beobachteten Werts der Rotationsgeschwindigkeit des Motors (101) zu erfassen;
ein Startbefehlswertaufzeichnungsmittel, das ausgestaltet ist, um einen Rotationsstartbefehlswert aufzuzeichnen, der der Befehlswert ist, der von dem Befehlswertausgabemittel zu einem Timing entsprechen deinem Timing ausgegeben wird, an dem der Start der Rotation erfasst wird, auf einem Aufzeichnungsmedium (114); und
ein Betriebsmodusumschaltmittel, das ausgestaltet ist, um ein Betriebsmodus in einen normalen Modus oder einen Untersuchungsmodus umzuschalten;
wobei das Startbefehlswertaufzeichnungsmittel eine Mehrzahl von Rotationsstartbefehlswerten aufzeichnet, die in Übereinstimmung mit einer Mehrzahl von Aktivierungen des Motors (101) erhalten werden, wenn der Betriebsmodus in dem normalen Modus ist, und einem Überschreiben und Aufzeichnen des Rotationsstartbefehlswerts, der erhalten wird, wenn der Motor (101) aktiviert wird, von den aufgezeichneten Rotationsstartbefehlswert, wenn der Betriebsmodus in dem Untersuchungsmodus ist, und
wobei das Befehlswertausgabemittel einen Anfangswert auf der Grundlage von einem oder mehreren Rotationsstartbefehlswerten bestimmt, die in dem Aufzeichnungsmedium (114) aufgezeichnet sind, wenn der Motor (101) aktiviert wird.

## Revendications

1. Système de moteur de ventilateur (1) comprenant :
une unité de moteur de ventilateur (10) comportant un moteur (101), un ventilateur (102) configuré pour être mis en rotation par le moteur (101), et un dispositif de commande (100) configuré pour commander une vitesse de rotation du moteur (101) selon une valeur d'ordre d'entrée ;
une unité de fourniture en sortie de valeur d'ordre (110) configurée pour fournir en sortie la valeur d'ordre au dispositif de commande (100) tout en augmentant la valeur d'ordre depuis une valeur initiale prédéterminée lorsque le moteur (101) dans un état arrêté est activé ;
une unité de détection de démarrage (111) configurée pour détecter un démarrage de rotation du moteur (101) sur la base d'une valeur observée de la vitesse de rotation du moteur (101) ;
une unité d'enregistrement de valeur d'ordre de démarrage (112) configurée pour acquérir une valeur d'ordre de démarrage de rotation, qui est la valeur d'ordre fournie en sortie par l'unité de fourniture en sortie de valeur d'ordre (110) à un moment correspondant à un moment auquel le démarrage de rotation est détecté, et pour enregistrer la valeur d'ordre de démarrage de rotation acquise sur un support d'enregistrement (114) ; et
une unité de changement de mode de fonctionnement (113) configurée pour changer un mode de fonctionnement en un mode normal ou en un mode d'inspection,
dans lequel l'unité d'enregistrement de valeur d'ordre de démarrage (112) enregistre une pluralité de valeurs d'ordre de démarrage de rotation acquises en correspondance avec une pluralité d'activations du moteur (101) si le mode de fonctionnement est le mode normal et réécrit et enregistre la valeur d'ordre de démarrage de rotation acquise lorsque le moteur (101) est activé à partir de la valeur d'ordre de démarrage de rotation enregistrée si le mode de fonctionnement est le mode d'inspection, et
dans lequel l'unité de fourniture en sortie de valeur d'ordre (110) détermine une valeur initiale sur la base d'une ou de plusieurs valeurs d'ordre de démarrage de rotation enregistrées sur le support d'enregistrement (114) lorsque le moteur (101) est activé.

2. Système de moteur de ventilateur (1) selon la revendication 1, dans lequel l'unité d'enregistrement de valeur d'ordre de démarrage (112) est configurée pour enregistrer la valeur d'ordre fournie en sortie à un instant prédéterminé préétabli avant le moment auquel le démarrage de rotation est détecté au moment correspondant au moment auquel le démarrage de rotation est détecté en tant que valeur d'ordre de démarrage de rotation sur le support d'enregistrement (114).

3. Climatiseur comprenant le système de moteur de ventilateur (1) selon la revendication 1 ou 2.

4. Procédé de commande d'une unité de moteur de ventilateur (10) comportant un moteur (101), un ventilateur (102) configuré pour être mis en rotation par le moteur (101), et un dispositif de commande (100) configuré pour commander une vitesse de rotation du moteur (101) selon une valeur d'ordre d'entrée, le procédé comprenant :
une étape de fourniture en sortie de valeur d'ordre consistant à fournir en sortie la valeur d'ordre au dispositif de commande (100) tout en augmentant la valeur d'ordre depuis une valeur initiale prédéterminée lorsque le moteur (101) dans un état arrêté est activé ;
une étape de détection de démarrage consistant à détecter un démarrage de rotation du moteur (101) sur la base d'une valeur observée de la vitesse de rotation du moteur (101) ;
une étape d'enregistrement de valeur d'ordre de démarrage consistant à enregistrer une valeur d'ordre de démarrage de rotation, qui est la valeur d'ordre fournie en sortie à un moment correspondant à un moment auquel le démarrage de rotation est détecté, sur un support d'enregistrement (114) ; et
une étape de changement de mode de fonctionnement consistant à changer un mode de fonctionnement en un mode normal ou en un mode d'inspection,
dans lequel l'étape d'enregistrement de valeur d'ordre de démarrage comporte l'enregistrement d'une pluralité de valeurs d'ordre de démarrage de rotation acquises en correspondance avec une pluralité d'activations du moteur (101) si le mode de fonctionnement est le mode normal et la réécriture et l'enregistrement de la valeur d'ordre de démarrage de rotation acquise lorsque le moteur (101) est activé à partir de la valeur d'ordre de démarrage de rotation enregistrée si le mode de fonctionnement est le mode d'inspection, et
dans lequel l'étape de fourniture en sortie de valeur d'ordre comporte la détermination d'une valeur initiale sur la base d'une ou de plusieurs valeurs d'ordre de démarrage de rotation enregistrées sur le support d'enregistrement (114) lorsque le moteur (101) est activé.

5. Programme pour amener un ordinateur, qui commande une unité de moteur de ventilateur (10) comportant un moteur (101), un ventilateur (102) configuré pour être mis en rotation par le moteur (101), et un dispositif de commande (100) configuré pour commander une vitesse de rotation du moteur (101) selon une valeur d'ordre d'entrée, à fonctionner comme :
un moyen de fourniture en sortie de valeur d'ordre configuré pour fournir en sortie la valeur d'ordre au dispositif de commande (100) tout en augmentant la valeur d'ordre depuis une valeur initiale prédéterminée lorsque le moteur (101) dans un état arrêté est activé ;
un moyen de détection de démarrage configuré pour détecter un démarrage de rotation du moteur (101) sur la base d'une valeur observée de la vitesse de rotation du moteur (101) ;
un moyen d'enregistrement de valeur d'ordre de démarrage configuré pour enregistrer une valeur d'ordre de démarrage de rotation, qui est la valeur d'ordre fournie en sortie par le moyen de fourniture en sortie de valeur d'ordre à un moment correspondant à un moment auquel le démarrage de rotation est détecté, sur un support d'enregistrement (114) ; et
un moyen de changement de mode de fonctionnement configuré pour changer un mode de fonctionnement en un mode normal ou en un mode d'inspection,
dans lequel le moyen d'enregistrement de valeur d'ordre de démarrage enregistre une pluralité de valeurs d'ordre de démarrage de rotation acquises en correspondance avec une pluralité d'activations du moteur (101) si le mode de fonctionnement est le mode normal et réécrit et enregistre la valeur d'ordre de démarrage de rotation acquise lorsque le moteur (101) est activé à partir de la valeur d'ordre de démarrage de rotation enregistrée si le mode de fonctionnement est le mode d'inspection, et
dans lequel le moyen de fourniture en sortie de valeur d'ordre détermine une valeur initiale sur la base d'une ou de plusieurs valeurs d'ordre de démarrage de rotation enregistrées sur le support d'enregistrement (114) lorsque le moteur (101) est activé.
